# EUROPEAN PATENT APPLICATION

(11) **EP 4 296 143 A2**
(43) Date of publication of application: **27.12.2023**
(21) Application number: 23176318.6
(22) Date of filing: 31.05.2023
(51) Int. Cl.: B62D 15/02, B60W 30/06, G08G 1/14

(54) **METHOD FOR DETERMINING PARKING SPACE ENTRANCE LINE, COMPUTER DEVICE, STORAGE MEDIUM, AND VEHICLE**

(30) Priority: 01.06.2022 CN 202210629552
(71) Applicant: Anhui NIO Autonomous Driving Technology Co., Ltd., Hefei, Anhui 230601 (CN)
(72) Inventor: ZHAO, Yuandong, Jiading Shanghai (CN); ZENG, Chao, Jiading Shanghai (CN)
(74) Representative: Vossius & Partner Patentanwälte Rechtsanwälte mbB

(57) **Abstract**

The disclosure relates to the technical field of parking, and specifically provides a method for determining a parking space entrance line, a computer device, a storage medium, and a vehicle, to solve the problem of accurately determining a parking space entrance line. For this purpose, the method of the disclosure includes: selecting, from boundary lines of a current parking space based on an adjacent relationship between parking spaces, a boundary line from which a vehicle is able to be parked into the current parking space as a candidate entrance line; and determining a final parking space entrance line based on the candidate entrance line. Through the above method, a positional relationship between different parking spaces can be fully considered, and the accurate parking space entrance line can be determined, which overcomes a prior-art defect that a boundary line between adjacent parking spaces may be incorrectly determined as a parking space entrance line when there are multiple adjacent parking spaces, and improves the accuracy of the parking space entrance line.

## Description

### Technical Field

The disclosure relates to the field of parking technologies, and specifically provides a method for determining a parking space entrance line, a computer device, a storage medium, and a vehicle.

### Background Art

During automatic parking, the accuracy of a parking space entrance line greatly affects the accuracy and efficiency of parking. Currently, a conventional method for determining a parking space entrance line is mainly to determine a distance between each side of a parking space and the central axis of a vehicle one by one after the parking space is recognized, and select a side with the smallest distance as a parking space entrance line. In this method, only a positional relationship between the parking space and the vehicle is considered, and a positional relationship between different parking spaces is not considered. As a result, when there are multiple adjacent parking spaces, a side between adjacent parking spaces may be incorrectly determined as a parking space entrance line, and under the guidance and control of this parking space entrance line, the vehicle cannot be accurately parked into the parking space.

Accordingly, there is a need for a new technical solution in the field to solve the problem described above.

### Summary

To overcome the above defect, the disclosure is proposed to provide a method for determining a parking space entrance line, a computer device, and a storage medium, to solve or at least partly solve the technical problem of how to accurately determine a parking space entrance line.

According to a first aspect, the disclosure provides a method for determining a parking space entrance line, including:
selecting, from boundary lines of a current parking space based on an adjacent relationship between parking spaces, a boundary line from which a vehicle is able to be parked into the current parking space as a candidate entrance line; and
determining a final parking space entrance line based on the candidate entrance line.

In a technical solution of the method for determining a parking space entrance line, the step of "determining a final parking space entrance line based on the candidate entrance line" specifically includes:
determining whether there is one candidate entrance line;
if yes, directly determining the candidate entrance line as the final parking space entrance line; or
if not, determining the final parking space entrance line from visible entrance lines of candidate entrance lines based on a positional relationship between the visible entrance lines and the vehicle, where the visible entrance lines are boundary lines visible relative to the center point of the vehicle on a plane where the current parking space is located.

In a technical solution of the method for determining a parking space entrance line, the step of "determining the final parking space entrance line from visible entrance lines of candidate entrance lines based on a positional relationship between the visible entrance lines and the vehicle" specifically includes:
selecting a visible entrance line closest to the central axis of the vehicle as the final parking space entrance line;
or, before the step of "determining the final parking space entrance line from visible entrance lines of candidate entrance lines based on a positional relationship between the visible entrance lines and the vehicle", the method further includes:
   if there is no visible entrance line among the candidate entrance lines, determining the final parking space entrance line based on a candidate entrance line pointed to by the vehicle in a direction from the rear axle of the vehicle to the front axle of the vehicle and/or a candidate entrance line adjacent to and parallel to a boundary line at a parking space opening of an adjacent parking space.

In a technical solution of the method for determining a parking space entrance line, the step of "determining the final parking space entrance line based on a candidate entrance line pointed to by the vehicle in a direction from the rear axle of the vehicle to the front axle of the vehicle and/or a candidate entrance line adjacent to and parallel to a boundary line at a parking space opening of an adjacent parking space" specifically includes:
step S1: determining whether there is a candidate entrance line pointed to by the vehicle in the direction from the rear axle of the vehicle to the front axle of the vehicle;
if yes, using the candidate entrance line pointed to by the vehicle as the final parking space entrance line; or if not, performing step S2;
step S2: determining whether there is a candidate entrance line adjacent to and parallel to a boundary line at a parking space opening of an adjacent parking space;
if yes, using the adjacent and parallel candidate entrance line as the final parking space entrance line; or if not, using the candidate entrance line closest to the central axis of the vehicle as the final parking space entrance line.

In a technical solution of the method for determining a parking space entrance line, the step of "selecting, from boundary lines of a current parking space based on an adjacent relationship between parking spaces, a boundary line from which a vehicle is able to be parked into the current parking space as a candidate entrance line" specifically includes:
using other parking spaces within a neighborhood range of the current parking space as adjacent parking spaces of the current parking space;
determining a boundary line opposite to a current boundary line among all boundary lines of the current parking space, and extending at least one point on the current boundary line to the outside of the current parking space along a direction of a line connecting midpoints of the current boundary line and the opposite boundary line;
if the at least one point can be extended into the adjacent parking space, determining that the current boundary line is an inaccessible boundary line from which the vehicle cannot be parked into the current parking space; otherwise, determining that the current boundary line is an accessible boundary line from which the vehicle can be parked into the current parking space; and
using the accessible boundary line as the candidate entrance line of the current parking space.

In a technical solution of the method for determining a parking space entrance line, after the step of "determining that the current boundary line is an accessible boundary line from which the vehicle can be parked into the current parking space", the method further includes correcting the accessible boundary line in the following manner:
determining whether there is a parking stopper in an area where the accessible boundary line is located; and
if yes, correcting the accessible boundary line to an inaccessible boundary line; or
if not, skipping correcting the accessible boundary line.

In a technical solution of the method for determining a parking space entrance line, the method further includes determining the visible entrance line of the current parking space in the following manner:
detecting whether the vehicle is between two opposite boundary lines of the current parking space;
if yes, using, as the visible entrance line of the current parking space, a boundary line closest to the center point of the vehicle among remaining two boundary lines of the current parking space other than the two opposite boundary lines; or
if not, obtaining a boundary line vertex closest to the vehicle among four boundary line vertices formed by intersection of four boundary lines of the current parking space, and using two boundary lines corresponding to the boundary line vertex closest to the vehicle as the visible entrance lines of the current parking space.

According to a second aspect, a computer device is provided. The computer device includes at least one processor and a storage apparatus configured to store multiple program codes, where the program codes are configured to be loaded and executed by the at least one processor to execute the method for determining a parking space entrance line in any one of the technical solutions of the method for determining a parking space entrance line.

According to a third aspect, a computer-readable storage medium is provided. The computer-readable storage medium stores multiple program codes, where the program codes are configured to be loaded and executed by at least one processor to execute the method for determining a parking space entrance line in any one of the technical solutions of the method for determining a parking space entrance line.

According to a fourth aspect, a vehicle is provided, and the vehicle includes the computer device described in the above technical solution of the computer device.

The above one or more technical solutions of the disclosure have at least one or more of the following beneficial effects:
In the technical solutions for implementing the disclosure, a boundary line from which a vehicle is able to be parked into a current parking space may be selected, from boundary lines of the current parking space based on an adjacent relationship between parking spaces, as a candidate entrance line; and a final parking space entrance line is determined based on the candidate entrance line. Through the above implementation, a positional relationship between different parking spaces can be fully considered, and the accurate parking space entrance line can be determined, which overcomes a prior-art defect that a boundary line between adjacent parking spaces may be incorrectly determined as a parking space entrance line when there are multiple adjacent parking spaces.

Further, in some technical solutions for implementing the disclosure, during determining of the final parking space entrance line based on the candidate entrance line, the visible entrance line (a boundary line visible relative to the center point of the vehicle on the plane where the current parking space is located) of the candidate entrance line may be determined first, and the final parking space entrance line is determined from the visible entrance line based on the positional relationship between the visible entrance line and the vehicle. Since the visible entrance line is visible to the vehicle, selecting the visible entrance line as the parking space entrance line can better guide the vehicle to be parked into the parking space and further improve the parking accuracy of the vehicle.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In the stages:
FIG. 1 is a schematic flowchart of main steps of a method for determining a parking space entrance line according to an embodiment of the disclosure;
FIG. 2 is a schematic flowchart of main steps of a method for determining a candidate entrance line according to an embodiment of the disclosure;
FIG. 3 is a schematic diagram of an inaccessible boundary line according to an embodiment of the disclosure;
FIG. 4 is a schematic diagram of an inaccessible boundary line according to another embodiment of the disclosure;
FIG. 5 is a schematic diagram of an inaccessible boundary line according to still another embodiment of the disclosure;
FIG. 6 is a schematic flowchart of main steps of a method for determining a parking space entrance line based on a candidate entrance line according to an embodiment of the disclosure;
FIG. 7 is a schematic diagram of a visible entrance line according to an embodiment of the disclosure;
FIG. 8 is a schematic diagram of a visible entrance line according to another embodiment of the disclosure;
FIG. 9 is a schematic diagram of a visible entrance line according to still another embodiment of the disclosure;
FIG. 10 is a schematic diagram of a visible entrance line according to yet another embodiment of the disclosure; and

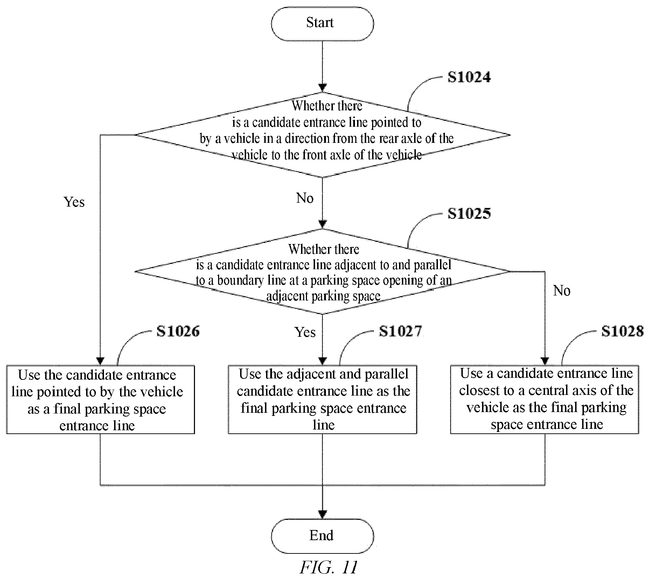

FIG. 11 is a schematic flowchart of main steps of a method for determining a parking space entrance line based on a candidate entrance line pointed to by a vehicle in a direction from the rear axle of the vehicle to the front axle of the vehicle and/or a candidate entrance line adjacent to and parallel to a boundary line at a parking space opening of an adjacent parking space according to an embodiment of the disclosure.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, "processor" may include hardware, software or a combination of both. The processor may be a central processing unit, a microprocessor, a graphics processing unit, a digital signal processor, or any other suitable processor. The processor has a data and/or signal processing function. The processor may be implemented in software, hardware, or a combination thereof. A computer-readable storage medium includes any suitable medium that can store program code, such as a magnetic disk, a hard disk, an optical disc, a flash memory, a read-only memory, or a random access memory. The term "A and/or B" indicates all possible combinations of A and B, for example, only A, only B, or A and B.

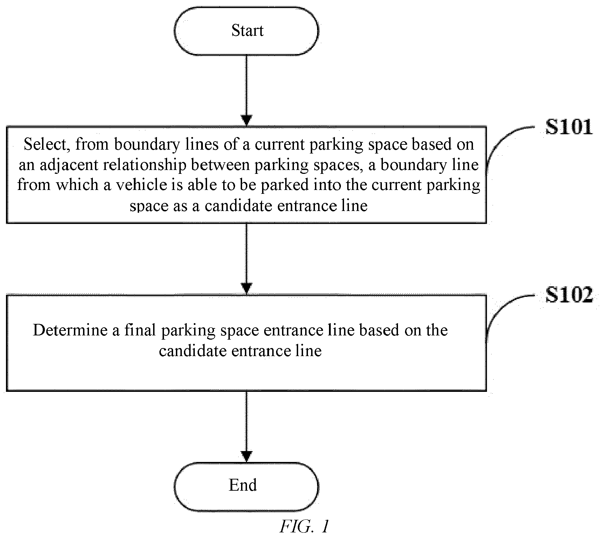

FIG. 1 is a schematic flowchart of main steps of a method for determining a parking space entrance line according to an embodiment of the disclosure. As shown in FIG. 1, the method for determining a parking space entrance line in this embodiment of the disclosure mainly includes the following step S 101 and step S 102.

In step S 101, a boundary line from which a vehicle is able to be parked into a current parking space is selected, from boundary lines of the current parking space based on an adjacent relationship between parking spaces, as a candidate entrance line.

The parking space is usually a parallelogram parking space formed by four boundary lines, and each side of the parallelogram is a boundary line of the parking space, where the parallelogram includes a rectangle.

Different parking spaces are usually sequentially arranged in a straight line or an arc shape, an idle area between adjacent sides of two adjacent parking spaces is usually relatively small, and a vehicle cannot enter a parking space from a boundary line on the adjacent sides. Therefore, based on the adjacent relationship between the parking spaces, boundary lines that are accessible boundary lines through which the vehicle can be parked into the parking space, and boundary lines that are inaccessible boundary lines through which the vehicle cannot be parked into the parking space may be identified. Then, the accessible boundary lines are used as candidate entrance lines.

In step S102, a final parking space entrance line is determined based on the candidate entrance line.

Since each candidate entrance line is an accessible boundary line, no matter which candidate entrance line is selected, it can be ensured that the vehicle can be parked into the parking space normally. In some preferred implementations, a candidate entrance line closest to the vehicle may be preferably selected as the parking space entrance line, such that a vehicle can be parked as soon as possible and the parking efficiency can be improved.

In the method described in step S101 and step S102, a positional relationship between different parking spaces can be fully considered, and the accurate parking space entrance line can be determined, which overcomes a prior-art defect that a boundary line between adjacent parking spaces may be incorrectly determined as a parking space entrance line when there are multiple adjacent parking spaces.

Step S101 and step S102 will be further described below respectively.

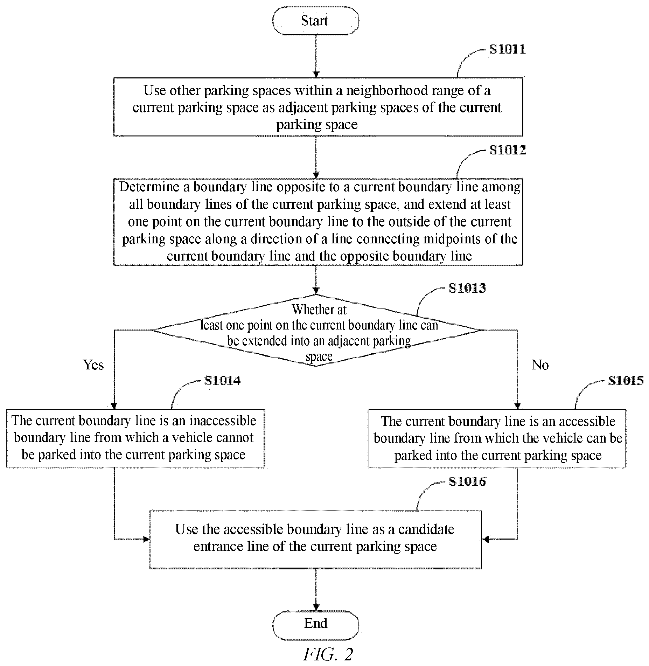

In some implementations of step S101, to accurately identify boundary lines that are accessible boundary lines and boundary lines that are inaccessible boundary lines, points on the boundary line of the current parking space may be extended, whether the current parking space is adjacent to another parking space may be determined based on whether an extension line falls into the another parking space, and then whether a corresponding boundary line is an inaccessible boundary line is determined. Specifically, referring to FIG. 2, in this implementation, the following step S1011 to step S 1016 may be performed to select, from the boundary lines of the current parking space, the boundary line from which the vehicle can be parked into the current parking space as the candidate entrance line.

In step S 1011: other parking spaces within a neighborhood range of the current parking space are used as adjacent parking spaces of the current parking space.

The neighborhood range is a range that can at least cover the adjacent parking spaces of the current parking space. Adjacent parking spaces within the neighborhood range at least include the adjacent parking spaces of the current parking space, and in addition to the adjacent parking spaces, may further include other parking spaces (not the current parking space) adjacent to the adjacent parking spaces. In this embodiment of the disclosure, a size of the neighborhood range may be set based on a size of the parking space. For example, if a length and a width of the parking space are 5 meters and 2.5 meters respectively, a length and a width of the neighborhood range may be 10 meters and 5 meters.

Since there are usually a lot of parking spaces in a parking lot, the adjacent parking spaces within the neighborhood range are first obtained, and then the candidate entrance line is selected based on these adjacent parking spaces. Therefore, there is no need to analyze a parking space outside the neighborhood range, which can greatly reduce a calculation amount of selecting the candidate entrance line and improve the efficiency of selecting the candidate entrance line.

In step S1012: a boundary line opposite to a current boundary line among all boundary lines of the current parking space is determined, and at least one point on the current boundary line is extended to the outside of the current parking space along a direction of a line connecting midpoints of the current boundary line and the opposite boundary line.

A parking space is usually a parallelogram parking space formed by four boundary lines. In this parallelogram, a boundary line that has no intersection with the current boundary line is a boundary line opposite to the current boundary line.

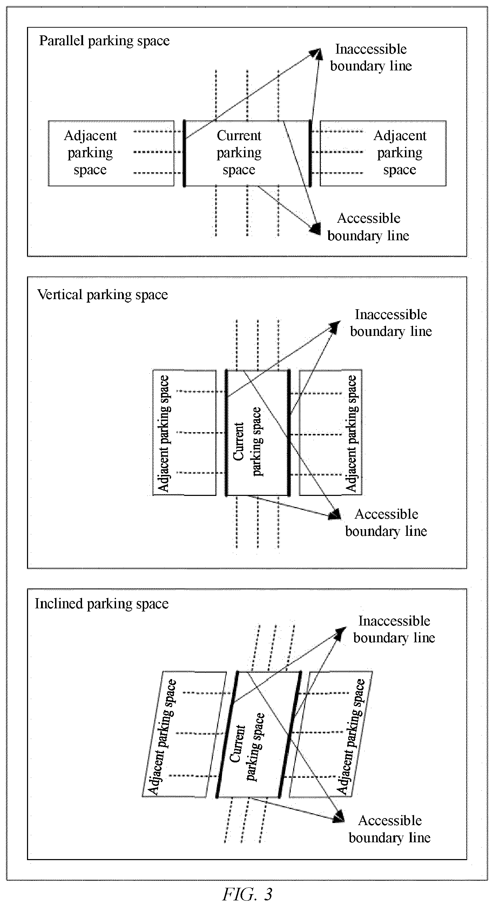

Referring to FIG. 3, FIG. 3 includes three types of parking spaces, that is, a parallel parking space, a vertical parking space, and an inclined parking space. The parallel parking space is used as an example. In the parallel parking space, it is assumed that the middle parking space is the current parking space. Left and right boundary lines (bold boundary lines in FIG. 3) of the current parking space are two opposite boundary lines. Upper and lower boundary lines (unbold boundary lines in FIG. 3) of the current parking space are also two opposite boundary lines. A dotted line in FIG. 3 represents an extension line formed by extending the point on a boundary line to the outside of the current parking space along a direction of a line for connecting the midpoints of two opposite boundary lines. In FIG. 3, three points on each boundary line are extended to the outside of the current parking space to form three extension lines.

In step S 1013: whether at least one point on the current boundary line can be extended into an adjacent parking space is determined. If yes, step S1014 is performed. If no point can be extended into the adjacent parking space, step S1015 is performed.

In step S 1014: it is determined that the current boundary line is an inaccessible boundary line from which the vehicle cannot be parked into the current parking space.

If at least one point on the current boundary line can be extended into the adjacent parking space, the first adjacent parking space into which the point can be extended is the adjacent parking space of the current parking space, and the current boundary line is an inaccessible boundary line.

Still refer to the parallel parking space in FIG. 3. Three points on a left boundary line of the current parking space can be extended into an adjacent parking space on the left side of the current parking space. The adjacent parking space on the left side is an adjacent parking space of the current parking space, and a left boundary line in the current parking space is an inaccessible boundary line. Similarly, an adjacent parking space on the right side of the current parking space is also an adjacent parking space of the current parking space, and a right boundary line in the current parking space is also an inaccessible boundary line.

In step S1015: it is determined that the current boundary line is an accessible boundary line from which the vehicle can be parked into the current parking space.

If no point on the current boundary line can be extended into an adjacent parking space, it means that there is no adjacent parking space outside the current boundary line, and the current boundary line is an accessible boundary line.

Still refer to the parallel parking space in FIG. 3. All three points of an upper boundary line in the current parking space cannot be extended into another parking space. Therefore, the upper boundary line in the current parking space is an accessible boundary line. Similarly, a lower boundary line in the current parking space is also an accessible boundary line.

In step S1016: the accessible boundary line is used as the candidate entrance line of the current parking space.

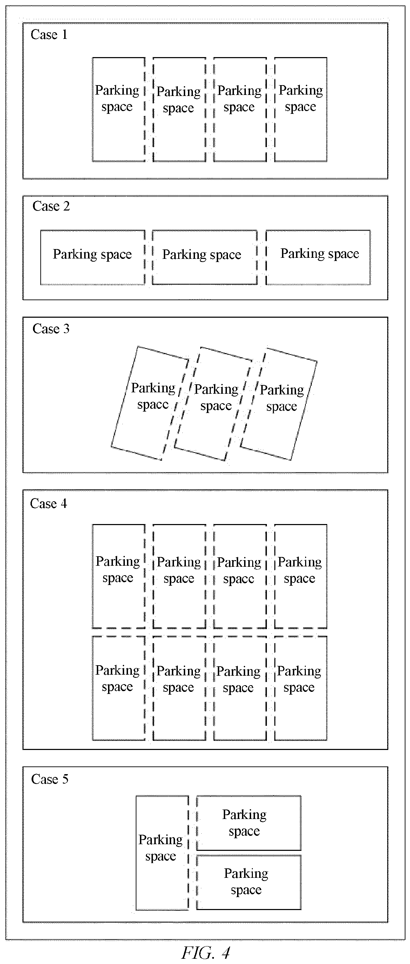

Referring to FIG. 4, FIG. 4 exemplarily shows accessible boundary lines and inaccessible boundary lines determined by using the method described in step S1011 to step S1016 in parking spaces arranged in five different arrangement manners. In FIG. 4, a solid line of a parking space represents an accessible boundary line, and a dashed line represents an inaccessible boundary line.

In the method described in step S1011 to step S1016, boundary lines that are accessible boundary lines and boundary lines that are inaccessible boundary lines can be accurately identified, thereby improving the accuracy of the candidate entrance line.

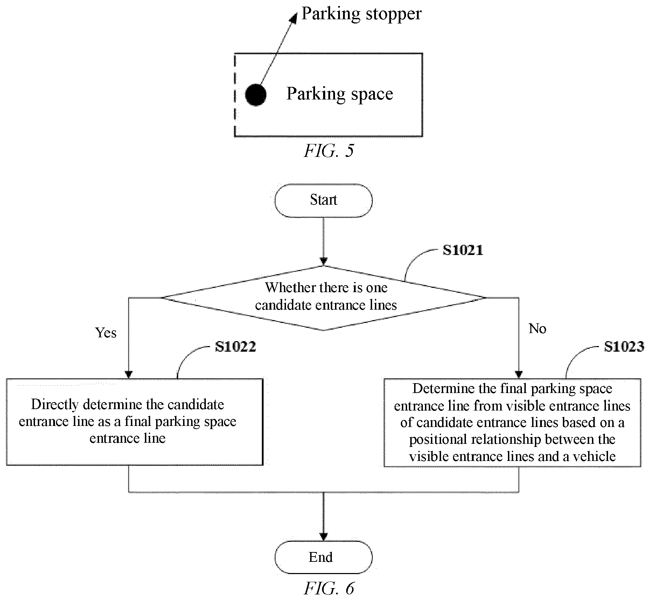

In practical application, a parking stopper is usually set in an area where a boundary line of a parking space is located. When there is a parking stopper, a vehicle cannot be normally parked into a parking space from the boundary line. To eliminate the interference of the parking stopper with the accessible boundary line, in some implementations of step S1015, after it is determined that the current boundary line is an accessible boundary line from which the vehicle can be parked into the current parking space, the accessible boundary line may also be corrected by the following steps: determining whether there is a parking stopper in an area where the accessible boundary line is located; and if yes, correcting the accessible boundary line to an inaccessible boundary line; or if not, skipping correcting the accessible boundary line. As shown in FIG. 5, a parking stopper is set in an area where a left boundary line (a dashed line in FIG. 5) in a parking space is located. Therefore, it may be determined that the left boundary line is an inaccessible boundary line.

Step S101 is further described above, and step S102 is further described below.

In some implementations of step S102, after the candidate entrance line is determined, to further improve parking efficiency and reliability, the visible entrance lines may be selected from the candidate entrance lines, and then the final parking space entrance line may be selected from the visible entrance lines for parking. The visible entrance line is a boundary line visible relative to the center point of the vehicle on the plane where the current parking space is located. Specifically, referring to FIG. 6, in this implementation, the final parking space entrance line may be determined through the following step S1021 to step S1023.

In step S1021: whether there is one candidate entrance line is determined. If yes, step S1022 is performed. If not, step S1023 is performed.

In step S1022: the candidate entrance line is directly determined as the final parking space entrance line. Since there is only one candidate entrance line, there is no need to select a visible entrance line from the candidate entrance line, and the candidate entrance line is directly used as the final parking space entrance line.

In step S1023: the final parking space entrance line is determined from visible entrance lines of candidate entrance lines based on a positional relationship between the visible entrance lines and the vehicle.

Since each visible entrance line is an accessible boundary line and is visible to the vehicle, no matter which visible entrance line is selected, it can be ensured that the vehicle can be normally parked into the parking space. In some preferred implementations, a visible entrance line closest to the vehicle may be preferably selected as the parking space entrance line, such that a vehicle can be parked as soon as possible and the parking efficiency can be improved. Specifically, a visible entrance line closest to the central axis of the vehicle may be selected as the final parking space entrance line. The central axis of the vehicle refers to a line formed by connecting the midpoint of the rear axle of the vehicle to the midpoint of the front axle of the vehicle.

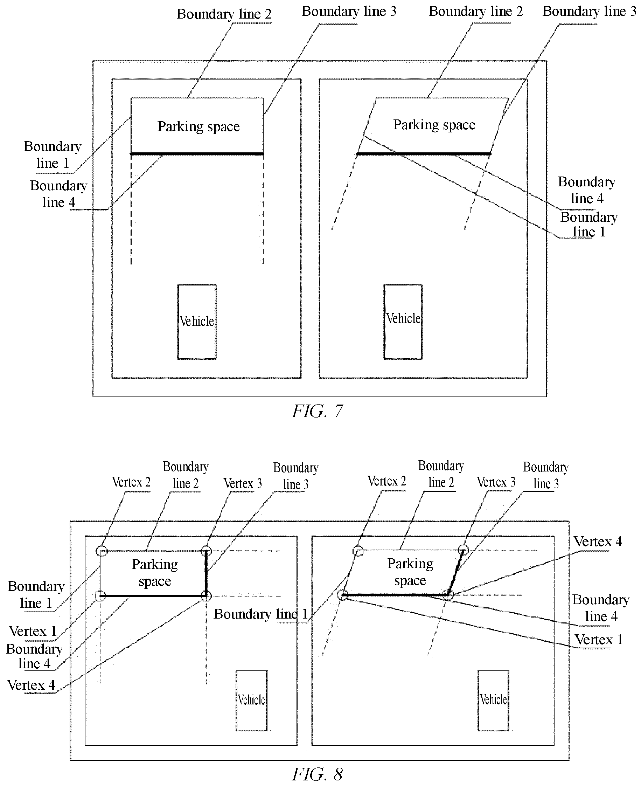

The method for determining a visible entrance line in this embodiment of the disclosure will be described below with reference to FIG. 7 to FIG. 10. Specifically, in this embodiment of the disclosure, the visible entrance line of the parking space may be determined through the following step 11 to step 13.

In step 11: detecting whether the vehicle is between two opposite boundary lines of the current parking space; If yes, step 12 is performed. If not, step 13 is performed.

In step 12: a boundary line closest to the center point of the vehicle among remaining two boundary lines of the current parking space other than the two opposite boundary lines is used as the visible entrance line of the current parking space.

Referring to the parking space on the left side in FIG. 7, a boundary line 1 and a boundary line 3 are two opposite boundary lines, and a boundary line 2 and a boundary line 4 are the other two opposite boundary lines. Since a vehicle is located between the boundary line 1 and the boundary line 3, the visible entrance line is selected from the boundary line 2 and the boundary line 4. Because the boundary line 4 is the closest to the center point of the vehicle, the boundary line 4 is selected as the visible entrance line. Similarly, in the parking space on the right side in FIG. 7, the boundary line 4 is also selected as the visible entrance line.

In step 13: a boundary line vertex closest to the vehicle among four boundary line vertices formed by intersection of four boundary lines of the current parking space is obtained, and two boundary lines corresponding to the boundary line vertex closest to the vehicle are used as the visible entrance lines of the current parking space.

Referring to the parking space on the left side in FIG. 8, a boundary line 1 and a boundary line 3 are two opposite boundary lines, and a boundary line 2 and a boundary line 4 are the other two opposite boundary lines. The vehicle is neither between the boundary line 1 and the boundary line 3, nor between the boundary line 2 and the boundary line 4. Four boundary line vertices formed by the boundary line 1 to the boundary line 4 are sequentially a vertex 1, a vertex 2, a vertex 3, and a vertex 4, with the vertex 4 closest to the vehicle. Two boundary lines corresponding to the vertex 4 (or two boundary lines connected to the vertex 4) are the boundary line 3 and the boundary line 4 respectively. Therefore, the boundary line 3 and the boundary line 4 are used as the visible entrance lines of the current parking space. Similarly, in the parking space on the right side in FIG. 8, the boundary line 3 and the boundary line 4 are also selected as visible entrance lines.

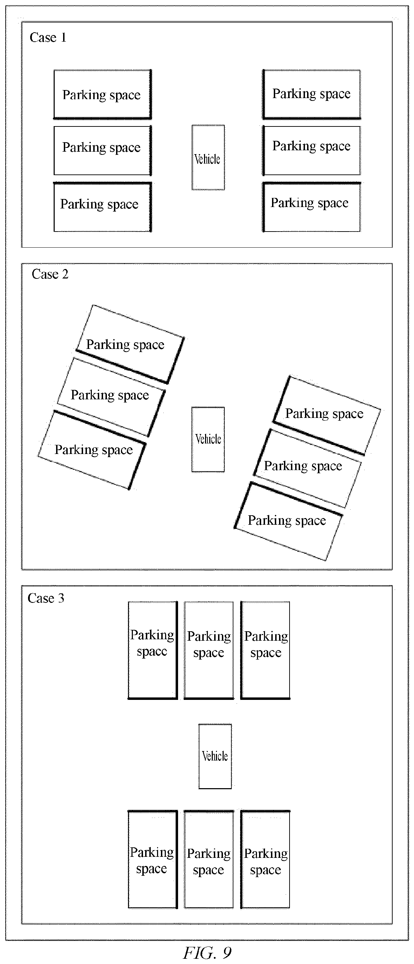

Referring to FIG. 9, FIG. 9 exemplarily shows visible entrance lines determined by using the method described in step 11 to step 13 in parking spaces arranged in three different arrangement manners. A bold solid line of a parking space in FIG. 9 indicates the visible entrance line.

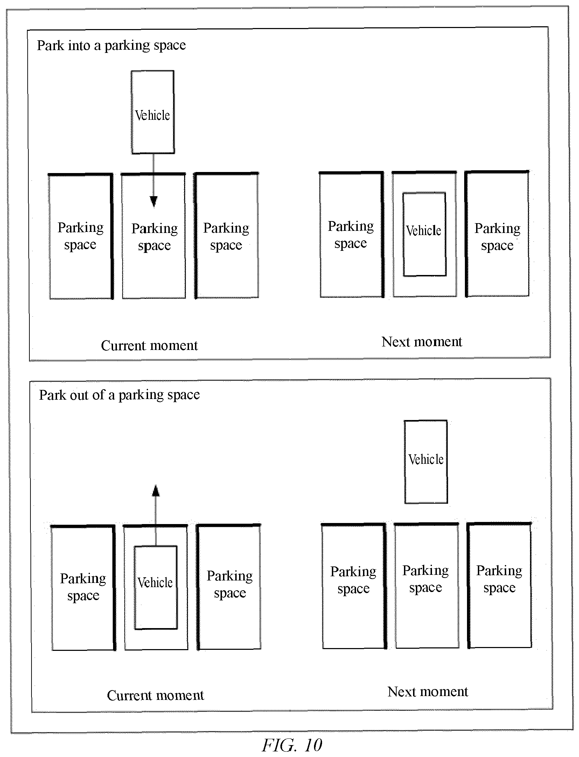

Referring to FIG. 10, FIG. 10 exemplarily shows visible entrance lines determined by using the method described in step 11 to step 13 when a vehicle is parked into and out of a parking space. A bold solid line of a parking space in FIG. 10 indicates the visible entrance line.

The above is the specific description of the method for determining a visible entrance line.

Further, in some implementations of step S102, when there are multiple candidate entrance lines, if there is no visible entrance line among the candidate entrance lines determined by using the method in the above implementation, the parking space entrance line may be selected based on a candidate entrance line pointed to by the vehicle in a direction from the rear axle of the vehicle to the front axle of the vehicle and/or a candidate entrance line adjacent to and parallel to a boundary line at a parking space opening of an adjacent parking space. Compared with other candidate entrance lines, the candidate entrance line pointed to by the vehicle in the direction from the rear axle of the vehicle to the front axle of the vehicle is more conducive to the entrance of the vehicle, thereby improving the parking efficiency of the vehicle. It is highly probable that the candidate entrance line adjacent to and parallel to the boundary line at the parking space opening of the adjacent parking space is a boundary line at a parking space opening of the current parking space. If this candidate entrance line is used as the parking space entrance line, the parking reliability of the vehicle can be improved, and it can be ensured that the vehicle can be normally parked into the parking space. Specifically, referring to FIG. 4, when there are multiple candidate entrance lines and there is no visible entrance line among the candidate entrance lines, the parking space entrance line may be determined from the candidate entrance lines through the following step S 1024 to step S 1028.

In step S 1024: determining whether there is a candidate entrance line pointed to by the vehicle in the direction from the rear axle of the vehicle to the front axle of the vehicle; If yes, step S 1026 is performed. If not, step S 1025 is performed.

In step S 1025: whether there is a candidate entrance line adjacent to and parallel to a boundary line at a parking space opening of an adjacent parking space is determined. If yes, step S 1027 is performed. If not, step S 1028 is performed.

In step S 1026: the candidate entrance line pointed to by the vehicle is used as the final parking space entrance line.

In step S1027: the adjacent and parallel candidate entrance line is used as the final parking space entrance line.

In step S 1028: a candidate entrance line closest to the central axis of the vehicle is used as the final parking space entrance line.

It should be noted that in this implementation, being parallel to the boundary line at the parking space opening of the adjacent parking space means that an angle between the candidate entrance line and an extension line of the boundary line at the parking space opening of the adjacent parking space is smaller than a preset angle threshold. A person skilled in the art can flexibly set a specific size of the preset angle threshold according to actual needs, as long as it can be determined that the candidate entrance line is roughly parallel to the boundary line at the parking space opening of the adjacent parking space, for example, the preset angle threshold may be 5°.

In the method described in step S 1024 to step S 1028, when there are multiple candidate entrance lines and there is no visible entrance line among the candidate entrance lines, an optimal entrance line can be determined from the candidate entrance lines as the parking space entrance line, to improve the efficiency and reliability of vehicle parking.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by at least one processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program codes, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a computer device. In an embodiment of a computer device according to the disclosure, the computer device includes at least one processor and a storage apparatus. The storage apparatus may be configured to store a program for executing the method for determining a parking space entrance line of the above method embodiments. The at least one processor may be configured to execute the program in the storage apparatus, where the program includes but is not limited to a program for executing the method for determining a parking space entrance line of the above method embodiments. For ease of description, only parts related to the embodiments of the disclosure are shown. For specific technical details that are not disclosed, reference may be made to the method part of the embodiments of the disclosure. The computer device may be a device including various electronic devices.

Further, the disclosure further provides a computer-readable storage medium. In an embodiment of a computer-readable storage medium according to the disclosure, the computer-readable storage medium may be configured to store a program for executing the method for determining a parking space entrance line in the above method embodiments, and the program may be loaded and executed by at least one processor to implement the method for determining a parking space entrance line. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure further provides a vehicle. In an embodiment of a vehicle according to the disclosure, the vehicle may include the computer device described in the above embodiment of the computer device. In this embodiment, the vehicle may be a self-driving vehicle, an unmanned vehicle, or the like. In addition, according to types of power sources, the vehicle in this embodiment can be a fuel vehicle, an electric vehicle, a hybrid vehicle in which electric energy is mixed with fuel, or a vehicle using other new energy sources.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A method for determining a parking space entrance line, comprising:
selecting, from boundary lines of a current parking space based on an adjacent relationship between parking spaces, a boundary line from which a vehicle is able to be parked into the current parking space as a candidate entrance line; and
determining a final parking space entrance line based on the candidate entrance line.

2. The method for determining a parking space entrance line according to claim 1, wherein the step of "determining a final parking space entrance line based on the candidate entrance line" specifically comprises:
determining whether there is one candidate entrance line; and
if yes, directly determining the candidate entrance line as the final parking space entrance line; or
if not, determining the final parking space entrance line from visible entrance lines of candidate entrance lines based on a positional relationship between the visible entrance lines and the vehicle, wherein the visible entrance lines are boundary lines visible relative to the center point of the vehicle on a plane where the current parking space is located.

3. The method for determining a parking space entrance line according to claim 2, wherein the step of "determining the final parking space entrance line from visible entrance lines of candidate entrance lines based on a positional relationship between the visible entrance lines and the vehicle" specifically comprises:
selecting a visible entrance line closest to the central axis of the vehicle as the final parking space entrance line;
or
before the step of "determining the final parking space entrance line from visible entrance lines of candidate entrance lines based on a positional relationship between the visible entrance lines and the vehicle", the method further comprises:
if there is no visible entrance line among the candidate entrance lines, determining the final parking space entrance line based on a candidate entrance line pointed to by the vehicle in a direction from the rear axle of the vehicle to the front axle of the vehicle and/or a candidate entrance line adjacent to and parallel to a boundary line at a parking space opening of an adjacent parking space.

4. The method for determining a parking space entrance line according to claim 3, wherein the step of "determining the final parking space entrance line based on a candidate entrance line pointed to by the vehicle in a direction from the rear axle of the vehicle to the front axle of the vehicle and/or a candidate entrance line adjacent to and parallel to a boundary line at a parking space opening of an adjacent parking space" specifically comprises:
step S1: determining whether there is a candidate entrance line pointed to by the vehicle in the direction from the rear axle of the vehicle to the front axle of the vehicle;
if yes, using the candidate entrance line pointed to by the vehicle as the final parking space entrance line; or if not, performing step S2;
step S2: determining whether there is a candidate entrance line adjacent to and parallel to a boundary line at a parking space opening of an adjacent parking space;
if yes, using the adjacent and parallel candidate entrance line as the final parking space entrance line; or if not, using the candidate entrance line closest to the central axis of the vehicle as the final parking space entrance line.

5. The method for determining a parking space entrance line according to any of claims 1 to 4, wherein the step of "selecting, from boundary lines of a current parking space based on an adjacent relationship between parking spaces, a boundary line from which a vehicle is able to be parked into the current parking space as a candidate entrance line" specifically comprises:
using other parking spaces within a neighborhood range of the current parking space as adjacent parking spaces of the current parking space;
determining a boundary line opposite to a current boundary line among all boundary lines of the current parking space, and extending at least one point on the current boundary line to the outside of the current parking space along a direction of a line connecting midpoints of the current boundary line and the opposite boundary line;
if the at least one point can be extended into the adjacent parking space, determining that the current boundary line is an inaccessible boundary line from which the vehicle cannot be parked into the current parking space; otherwise, determining that the current boundary line is an accessible boundary line from which the vehicle can be parked into the current parking space; and
using the accessible boundary line as the candidate entrance line of the current parking space.

6. The method for determining a parking space entrance line according to claim 5, wherein after the step of "determining that the current boundary line is an accessible boundary line from which the vehicle can be parked into the current parking space", the method further comprises correcting the accessible boundary line in the following manner:
determining whether there is a parking stopper in the area where the accessible boundary line is located; and
if yes, correcting the accessible boundary line to an inaccessible boundary line; or
if not, skipping correcting the accessible boundary line.

7. The method for determining a parking space entrance line according to any one of claims 1 to 4, wherein the method further comprises determining the visible entrance line of the current parking space in the following manner:
detecting whether the vehicle is between two opposite boundary lines of the current parking space; and
if yes, using, as the visible entrance line of the current parking space, the boundary line closest to the center point of the vehicle among remaining two boundary lines of the current parking space other than the two opposite boundary lines; or
if not, obtaining the boundary line vertex closest to the vehicle among four boundary line vertices formed by intersection of four boundary lines of the current parking space, and using two boundary lines corresponding to the boundary line vertex closest to the vehicle as the visible entrance lines of the current parking space.

8. A computer device, comprising at least one processor and a storage apparatus configured to store multiple pieces of program codes, wherein the program codes are configured to be loaded and executed by the at least one processor to perform a method for determining a parking space entrance line according to any one of claims 1 to 7.

9. A non-transitory computer-readable storage medium storing multiple program codes, wherein the program codes are configured to be loaded and executed by at least one processor to perform a method for determining a parking space entrance line according to any one of claims 1 to 7.

10. A vehicle, comprising the computer device according to claim 8.
